(19) Europäisches Patentamt

European Patent Office

Office européen des brevets

(11) **EP 4 106 329 A1**

(12) # EUROPEAN PATENT APPLICATION
published in accordance with Art. 153(4) EPC

(43) Date of publication:
**21.12.2022 Bulletin 2022/51**

(21) Application number: **20925970.4**

(22) Date of filing: **22.05.2020**

(51) International Patent Classification (IPC):
*H04N 13/106* (2018.01)

(86) International application number:
**PCT/CN2020/091856**

(87) International publication number:
**WO 2021/184533 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.03.2020 CN 202010201475**

(71) Applicant: **Shenzhen Proxinse Medical Ltd
Shenzhen, Guangdong 518000 (CN)**

(72) Inventors:
• **LU, Huihai**
  **Shenzhen, Guangdong 518000 (CN)**
• **WANG, Decai**
  **Shenzhen, Guangdong 518000 (CN)**
• **LAO, Xiaoliang**
  **Shenzhen, Guangdong 518000 (CN)**

(74) Representative: **Manitz Finsterwald
Patent- und Rechtsanwaltspartnerschaft mbB
Martin-Greif-Strasse 1
80336 München (DE)**

(54) **METHOD AND SYSTEM FOR AUTOMATICALLY OPTIMIZING 3D STEREOSCOPIC PERCEPTION, AND MEDIUM**

(57) Provided by the present invention are a method and system for automatically optimizing 3D stereoscopic perception, and a medium. The method comprises the following steps that are executed successively: step 1: given current left and right images, calculating a stereo disparity to generate a disparity map; step 2: calculating a depth value corresponding to each individual pixel by using the calculated disparity; step 3: calculating a depth distance of a target to be observed; step 4: acquiring corresponding left and right image displacement values by using the depth distance calculated in step 3; and step 5: applying the acquired image displacement values into a 3D display. The beneficial effect of the present invention is that: the method for automatically optimizing 3D stereoscopic perception according to the present invention solves fatigue and dizziness that are easily generated during the use of a 3D endoscope. By means of automatic optimization, symptoms can be alleviated, guaranteeing user comfort for a long time.

FIG. 3

## Description

## Technical Field

The present disclosure relates to the field of software, in particular to a method, system and medium for automatically optimizing 3D stereoscopic perception.

## Background of the Invention

A 3D endoscope uses two parallel cameras on the left and right to capture video about a target to be observed, processes the captured video with an image processing device, and finally transmits processed images from the left and right cameras to a display device for display. The display device may be an active 3D display or a passive 3D display. By viewing the display device, an endoscope user may fuse and reconstruct stereoscopic information about the target to be observed in the brain.

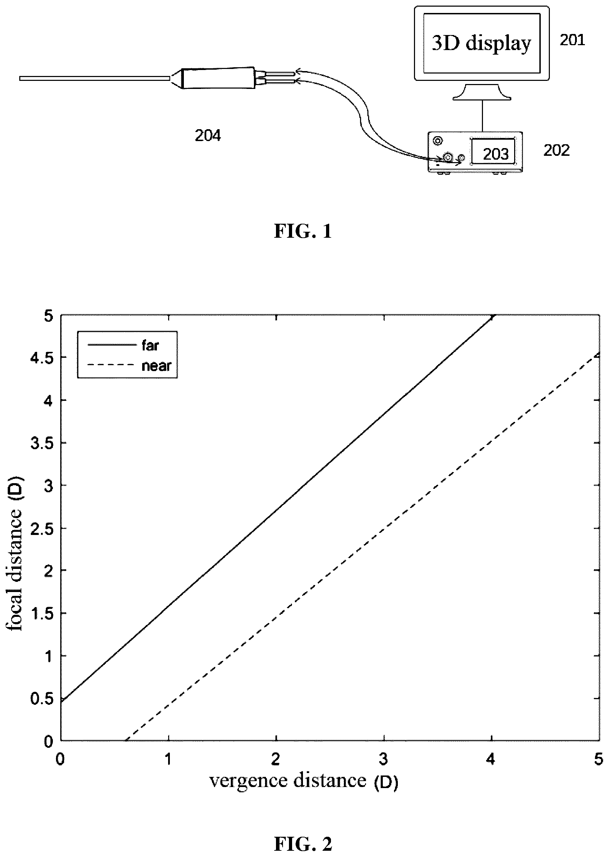

FIG. 1 is a typical 3D electronic endoscope system comprising a 3D display 201, a 3D endoscope host 202, a display touch screen 203 on the host, and an endoscope handle 204 which is responsible for transmitting the captured video signal to the 3D endoscope host 202. Generally speaking, the electronic endoscope is coupled to the host 202 through two lines: one is a signal line which is responsible for transmitting video signals and control signals; and the other one is a guide beam which is responsible for guiding light(s) from the host terminal 202 (or an independent cold light source system) to the handle terminal. After the video signal is processed, it is transmitted to the 3D display 201 through HDMI, or DP, or VGA, or other video signal transmission methods for display. Camera parameters, host control related parameters, patient management system, etc. are controlled by the display touch screen 203 on the host 202.

The usage of 3D endoscopes for a long time is always likely to cause the user to feel visual dizziness and fatigue. This is mainly caused by vergence-accommodation conflicts; that is, the focusing distance of a viewer's both eyes is inconsistent with the vergence distance of the viewer's viewing line. Through a series of visual experiments, a paper published by Shibata in 2011 found that when the vergence distance of the viewing line is within a certain range in front of and behind the focusing distance, the viewer can still easily obtain 3D information without visual fatigue. This range is called a comfort zone for observing 3D stereoscopic vision.

The cited reference: Shibata,T. and Kim,J. and Hoffman,D.M. and Banks,M.S., The zone of comfort: Predicting visual discomfort with stereo displays, Journal of Vision, 11(8):11,1-29.

According to the paper (Shibata, 2011), the comfort zone may be defined as:

$$D_{v\_far} = \frac{1}{1.129}\left(D_f - 0.442\right)$$

$$D_{v\_near} = \frac{1}{1.035}\left(D_f + 0.626\right)$$

where $D_{v\_far}$ and $D_{v\_near}$ are the farthest and nearest vergence distance in diopters (1/d, where $d$ is distance in meters), respectively, and $D_f$ is focal distance in diopters. FIG. 2 depicts the comfort zone at different focal distances.

In the commonly used parallel binocular stereo system, when a scene to be photographed is received by an observer through the 3D display, it is reconstructed between the observer's eyes and the screen. The visual focus of the observer generally falls on the display. At this point, it is obvious that the comfort zone mentioned above has not been maximized, that is, the comfort zone behind the display is completely abandoned, and the comfort zone in front of the display is also easily broken; thus a 3D image is unable to be visually generated by the observer, resulting in symptoms like dizziness.

Generally speaking, when using the parallel binocular stereo system, the scene to be photographed which has been reconstructed is adjusted to be located within the comfort zone by parallelly shifting images from the left and/or right camera. This adjustment is generally adjusted and fixed before leaving the factory. This makes it possible for the user to obtain a better 3D reconstruction effect after the target to be observed shall be in a certain depth range. When the target to be observed is too close to the camera, it will cause dizziness; and when the target is too far from the camera, the 3D effect will be reduced.

## Summary of the Invention

A method for automatically optimizing 3D stereoscopic perception provided according to the present disclosure may comprise the following steps that are executed successively:

    step 1: calculating a stereo disparity of given current left and right images to generate a disparity map;
    step 2: calculating a depth value corresponding to each individual pixel by using the calculated disparity;
    step 3: calculating a depth distance of a target to be observed;
    step 4: acquiring corresponding left and right image displacement values by using the depth distance calculated in step 3; and
    step 5: moving the left and right images according to the acquired image displacement values and performing them in a 3D display.

As a further improvement, in step 1, the disparity map may be acquired by a plurality of algorithms including SGBM algorithm and BM algorithm.

As a further improvement, the calculation of the stereo disparity comprises calculating the stereo disparity for an entire image or only for a selected region of interest (ROI).

As a further improvement, in step 2, a calculation formula of the depth value may be as follow:

$$Z(x, y) = \frac{f \times T_x}{d(x, y)}$$

where f is the focal length of a camera, $T_x$ is the center distance between left and right cameras, and (x,y) is a current pixel position.

As a further improvement, in the step 3, the average value, median value or maximum value of the depth values corresponding to all pixels in the entire image or a region of interest (ROI) is calculated as the depth distance of the target to be observed.

As a further improvement, the method may further comprise:

a step of generating a lookup table in advance: placing a target to be observed at different positions between 10 mm and 100 mm in front of a camera at an interval of 10 mm respectively, adjusting the left and right image displacement at each position until obtaining a 3D reconstruction effect desired by an observer, and recording information about each position and corresponding image displacement values to generate a lookup table; and

the step 4 may comprise a step of obtaining an image displacement value: when a current depth distance is between 10 mm and 100 mm, obtaining an image displacement value corresponding to the current depth distance by using linear interpolation according to the lookup table; when the current depth distance is less than 10 mm, adopting an image displacement value corresponding to the depth distance of 10 mm; and when the current depth distance is greater than 100 mm, adopting an image displacement value corresponding to the depth distance of 100 mm.

As a further improvement, when performing step 4, an environment that is identical or similar to an actual application scenario is used, including: adopting a display of the same size, and the same distance from the observer to a screen.

As a further improvement, the steps 1-5 are steps that perform an optimization process once, the optimization process being triggered actively by a user or being triggered automatically and continuously according to a predetermined interval.

A system for automatically optimizing 3D stereoscopic perception further provided according to the present disclosure may comprise:

a disparity map acquisition unit configured to calculate a stereo disparity of given current left and right images to generate a disparity map;

a depth value calculation unit configured to calculate a depth value corresponding to each individual pixel by using the calculated stereo disparity;

a depth distance calculation unit configured to calculate a depth distance of a target to be observed;

a left and right image displacement values acquisition unit configured to acquire corresponding left and right image displacement values by using the calculated depth distance; and

a display unit configured to move the left and right images according to the acquired image displacement values and perform them in a 3D display.

In the depth distance calculation unit, the average value, median value or maximum value of the depth values corresponding to all pixels in the entire image or a region of interest (ROI) may be calculated as the depth distance of the target to be observed; and

the left and right image displacement values acquisition unit may comprise:

a pre-generated lookup table unit configured to place a target to be observed at different positions between 10 mm and 100 mm in front of a camera at an interval of 10 mm respectively, adjust the left and right image displacement at each position until obtaining a 3D reconstruction effect desired by an observer, and record information about each position and corresponding image displacement values to generate a lookup table; and

an image displacement value acquisition unit configured to obtain an image displacement value corresponding to the current depth distance by using linear interpolation according to the lookup table when a current depth distance is between 10 mm and 100 mm; adopt an image displacement value corresponding to the depth distance of 10 mm when the current depth distance is less than 10 mm; and adopt an image displacement value corresponding to the depth distance of 100 mm when the current depth distance is greater than 100 mm.

A computer-readable storage medium may be further provided in accordance with the present disclosure. The computer-readable storage medium may store a computer program configured to implement the steps of the method according to the aforesaid method when called by a processor.

The beneficial effect of the present invention is that: the method for automatically optimizing 3D stereoscopic perception according to the present invention solves fatigue and dizziness that are easily generated during the use of a 3D endoscope. By means of automatic optimization, symptoms can be alleviated, guaranteeing user comfort for a long time.

## Brief Description of the Drawings

FIG. 1 is a typical 3D electronic endoscope system in the prior art;
FIG. 2 is the comfort zone at different focal distances found in the prior art;
FIG. 3 is a flowchart of a method for automatically optimizing 3D stereoscopic perception according to the present disclosure; and
FIG. 4 is a schematic diagram of the principle of disparity map according to the present disclosure.

## Detailed Description

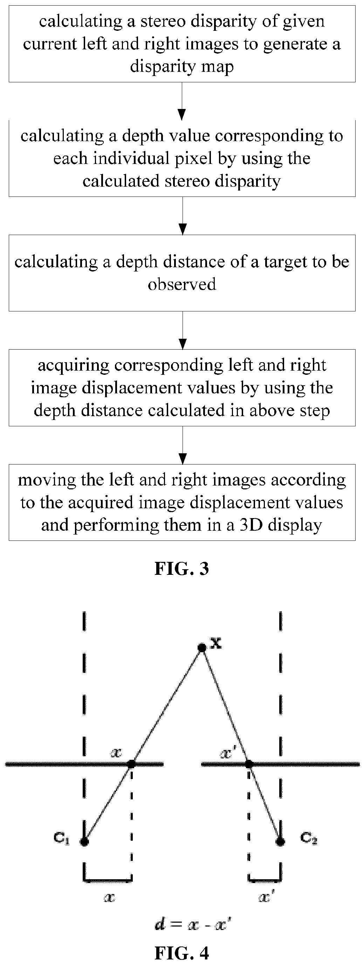

As shown in FIG. 3, a method for automatically optimizing 3D stereoscopic perception disclosed according to the present disclosure may comprises the following steps that are executed successively:

step 1: calculating a stereo disparity of given current left and right images to generate a disparity map;
step 2: calculating a depth value corresponding to each individual pixel by using the calculated stereo disparity;
step 3: calculating a depth distance of a target to be observed;
step 4: acquiring corresponding left and right image displacement values by using the depth distance calculated in step 3; and
step 5: moving the left and right images according to the acquired image displacement values and performing them in a 3D display.

In the step 1, the disparity map may be acquired by a plurality of algorithms which may include SGBM algorithm and BM algorithm, see [1] for details.

SGBM is the abbreviation of Semiglobal Block Matching; and
BM is the abbreviation of Block Matching.

Introduction to the principle of disparity map:
As shown in FIG. 4, given that there is a point X in a three-dimensional space, the coordinate thereof on the left view is x, and x' on the right view, and a stereo disparity is x-x'.
In the step 1, the calculation of the stereo disparity may comprise calculating the stereo disparity for an entire image or only for a selected region of interest (ROI).
In the step 2, a calculation formula of the depth value may be:

$$Z(x, y) = \frac{f \times T_x}{d(x, y)}$$

where f is the focal length of a camera, $T_x$ is the center distance between left and right cameras, and (x,y) is a current pixel position.
In the step 3, the average value, median value or maximum value of the depth values corresponding to all pixels in the entire image or a region of interest (ROI) is calculated as the depth distance of the target to be observed.
The step 4 may be implemented by:

a step of generating a lookup table in advance: placing a target to be observed at different positions between 10 mm and 100 mm in front of a camera at an interval of 10 mm respectively, adjusting the left and right image displacement at each position until obtaining a 3D reconstruction effect desired by an observer, and recording information about each position and corresponding image displacement values to generate a lookup table; and
a step of obtaining an image displacement value: when a current depth distance is between 10 mm and 100 mm, obtaining an image displacement value corresponding to the current depth distance by using linear interpolation according to the lookup table; when the current depth distance is less than 10 mm, adopting an image displacement value corresponding to the depth distance of 10 mm; and when the current depth distance is greater than 100 mm, adopting an image displacement value corresponding to the depth distance of 100 mm.

When performing the step 4, an environment that is identical or similar to an actual application scenario may be used, including: adopting a display of the same size, and the same distance from the observer to a screen.
The steps 1-5 may be steps that perform an optimization process once and may be performed by using a user-triggered mode or an automatically and continuously triggered mode. The user-triggered mode refers to a user using a handle button, a touch screen button, a foot pedal, a voice control, or other ways to trigger the optimization process to be run once. The automatically and continuously triggered mode refers to optimizing automatic triggering at certain intervals without user intervention.

[1] Heiko Hirschmuller. Stereo processing by semiglobal matching and mutual information. Pattern Analysis and Machine Intelligence, IEEE Transactions on, 30(2):328-341, 2008。

A system for automatically optimizing 3D stereoscopic perception further disclosed according to the present disclosure may comprise:

a disparity map acquisition unit configured to calculate a stereo disparity of given current left and right images to generate a disparity map;
a depth value calculation unit configured to calculate a depth value corresponding to each individual pixel by using the calculated stereo disparity;
a depth distance calculation unit configured to calculate a depth distance of a target to be observed;
a left and right image displacement values acquisition unit configured to acquire corresponding left and right image displacement values by using the calculated depth distance; and
a display unit configured to move the left and right images according to the acquired image displacement values and perform them in a 3D display.

In the depth distance calculation unit, the average value, median value or maximum value of the depth values corresponding to all pixels in the entire image or a region of interest (ROI) may be calculated as the depth distance of the target to be observed.

The left and right image displacement values acquisition unit may comprise:

a pre-generated lookup table unit configured to place a target to be observed at different positions between 10 mm and 100 mm in front of a camera at an interval of 10 mm respectively, adjust the left and right image displacement at each position until obtaining a 3D reconstruction effect desired by an observer, and record information about each position and corresponding image displacement values to generate a lookup table; and
an image displacement value acquisition unit configured to obtain an image displacement value corresponding to the current depth distance by using linear interpolation according to the lookup table when a current depth distance is between 10 mm and 100 mm; adopt an image displacement value corresponding to the depth distance of 10 mm when the current depth distance is less than 10 mm; and adopt an image displacement value corresponding to the depth distance of 100 mm when the current depth distance is greater than 100 mm.

A computer-readable storage medium may further be disclosed according to the present disclosure. The computer-readable storage medium may store a computer program configured to implement the steps of the method mentioned above when being called by a processor.

The beneficial effect of the present invention is that: the method for automatically optimizing 3D stereoscopic perception according to the present invention solves fatigue and dizziness that are easily generated during the use of a 3D endoscope. By means of automatic optimization, symptoms can be alleviated, guaranteeing user comfort for a long time.

The above is a further detailed description of the present disclosure in combination with specific preferred embodiments, and it cannot be considered that the specific implementation of the present disclosure is limited to these descriptions. For those of ordinary skill in the technical field of the present disclosure, without departing from the concept of the present disclosure, several simple deductions or substitutions can be made, which should be deemed to belong to the protection scope of the present disclosure.

**Claims**

1. A method for automatically optimizing 3D stereoscopic perception, comprising the following steps that are executed successively:

   step 1: calculating a stereo disparity of given current left and right images to generate a disparity map;
   step 2: calculating a depth value corresponding to each individual pixel by using the calculated stereo disparity;
   step 3: calculating a depth distance of a target to be observed;
   step 4: acquiring corresponding left and right image displacement values by using the depth distance calculated in step 3; and
   step 5: moving the left and right images according to the acquired image displacement values and performing them in a 3D display.

2. The method according to claim 1, wherein in the step 1, the disparity map is acquired by a plurality of algorithms including SGBM algorithm and BM algorithm.

3. The method according to claim 1, wherein in the step 1, the calculation of the stereo disparity comprises calculating the stereo disparity for an entire image or only for a selected region of interest (ROI).

4. The method according to claim 1, wherein in the step 2, a calculation formula of the depth value is:

$$Z(x, y) = \frac{f \times T_x}{d(x, y)}$$

where f is the focal length of a camera, $T_x$ is the center distance between left and right cameras, and (x,y) is a current pixel position.

5. The method according to claim 1, wherein in the step 3, the average value, median value or maximum value of the depth values corresponding to all pixels in the entire image or a region of interest (ROI) is calculated as the depth distance of the target to be observed.

6. The method according to claim 1, wherein the step 4 comprises:

a step of generating a lookup table in advance: placing a target to be observed at different positions between 10 mm and 100 mm in front of a camera at an interval of 10 mm respectively, adjusting the left and right image displacement at each position until obtaining a 3D reconstruction effect desired by an observer, and recording information about each position and corresponding image displacement values to generate a lookup table; and

a step of obtaining an image displacement value: when a current depth distance is between 10 mm and 100 mm, obtaining an image displacement value corresponding to the current depth distance by using linear interpolation according to the lookup table; when the current depth distance is less than 10 mm, adopting an image displacement value corresponding to the depth distance of 10 mm; and when the current depth distance is greater than 100 mm, adopting an image displacement value corresponding to the depth distance of 100 mm.

7. The method according to claim 5, wherein when performing the step 4, an environment that is identical or similar to an actual application scenario is used, including: adopting a display of the same size, and the same distance from the observer to a screen.

8. The method according to any one of claims 1-6, wherein the steps 1-5 are steps that perform an optimization process once, the optimization process being triggered actively by a user or being triggered automatically and continuously according to a predetermined interval.

9. A system for automatically optimizing 3D stereoscopic perception, comprising:

a disparity map acquisition unit configured to calculate a stereo disparity of given current left and right images to generate a disparity map;

a depth value calculation unit configured to calculate a depth value corresponding to each individual pixel by using the calculated stereo disparity;

a depth distance calculation unit configured to calculate a depth distance of a target to be observed;

a left and right image displacement values acquisition unit configured to acquire corresponding left and right image displacement values by using the calculated depth distance; and

a display unit configured to move the left and right images according to the acquired image displacement values and perform them in a 3D display.

10. The system according to claim 8, wherein in the depth distance calculation unit, the average value, median value or maximum value of the depth values corresponding to all pixels in the entire image or a region of interest (ROI) is calculated as the depth distance of the target to be observed; and

the left and right image displacement values acquisition unit comprises:

a pre-generated lookup table unit configured to place a target to be observed at different positions between 10 mm and 100 mm in front of a camera at an interval of 10 mm respectively, adjust the left and right image displacement at each position until obtaining a 3D reconstruction effect desired by an observer, and record information about each position and corresponding image displacement values to generate a lookup table; and

an image displacement value acquisition unit configured to obtain an image displacement value corresponding to the current depth distance by using linear interpolation according to the lookup table when a current depth distance is between 10 mm and 100 mm; adopt an image displacement value corresponding to the depth distance of 10 mm when the current depth distance is less than 10 mm; and adopt an image displacement value corresponding to the depth distance of 100 mm when the current depth distance is greater than 100 mm.

11. A computer-readable storage medium, wherein the computer-readable storage medium stores a computer program configured to implement the steps of the method according to any one of claims 1-5 when called by a processor.

**FIG. 1**

**FIG. 2**

calculating a stereo disparity of given current left and right images to generate a disparity map

calculating a depth value corresponding to each individual pixel by using the calculated stereo disparity

calculating a depth distance of a target to be observed

acquiring corresponding left and right image displacement values by using the depth distance calculated in above step

moving the left and right images according to the acquired image displacement values and performing them in a 3D display

**FIG. 3**

$$d = x - x'$$

**FIG. 4**

## INTERNATIONAL SEARCH REPORT

International application No.

**PCT/CN2020/091856**

### A. CLASSIFICATION OF SUBJECT MATTER

H04N 13/106(2018.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 立体, "3D", 三维, 深度, 位移, 视差, 显示, three 3w dimention+, stereoscop+, deep, depth, , disparity, distance, display+

### C. DOCUMENTS CONSIDERED TO BE RELEVANT

| Category* | Citation of document, with indication, where appropriate, of the relevant passages | Relevant to claim No. |
|---|---|---|
| X | CN 107820071 A (SUPERD CO., LTD.) 20 March 2018 (2018-03-20) description, paragraphs 111-169, figure 21 | 1-3, 5, 7-9, 11 |
| Y | CN 107820071 A (SUPERD CO., LTD.) 20 March 2018 (2018-03-20) description, paragraphs 111-169, figure 21 | 4, 6, 10 |
| Y | CN 106840398 A (NANJING UNIVERSITY) 13 June 2017 (2017-06-13) description paragraphs 36-38 | 4 |
| Y | CN 103167299 A (KINJAU LIMITED) 19 June 2013 (2013-06-19) description, paragraphs 45-47 | 6, 10 |
| A | CN 109993781 A (BEIJING TSING MICRO INTELLIGENT TECHNOLOGY CO., LTD.) 09 July 2019 (2019-07-09) entire document | 1-11 |
| A | CN 107516335 A (GOERTEK INC.) 26 December 2017 (2017-12-26) entire document | 1-11 |
| A | US 2018321738 A1 (AMAZON TECHNOLOGIES, INC.) 08 November 2018 (2018-11-08) entire document | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2020** | **21 December 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
**Information on patent family members**

International application No.

**PCT/CN2020/091856**

| Patent document cited in search report | | | Publication date (day/month/year) | Patent family member(s) | | | Publication date (day/month/year) |
|---|---|---|---|---|---|---|---|
| CN | 107820071 | A | 20 March 2018 | None | | | |
| CN | 106840398 | A | 13 June 2017 | CN | 106840398 | B | 02 February 2018 |
| CN | 103167299 | A | 19 June 2013 | None | | | |
| CN | 109993781 | A | 09 July 2019 | None | | | |
| CN | 107516335 | A | 26 December 2017 | US | 2020183166 | A1 | 11 June 2020 |
| | | | | WO | 2019033903 | A1 | 21 February 2019 |
| US | 2018321738 | A1 | 08 November 2018 | US | 10386919 | B2 | 20 August 2019 |
| | | | | US | 10146301 | B1 | 04 December 2018 |
| | | | | US | 2019294238 | A1 | 26 September 2019 |

Form PCT/ISA/210 (patent family annex) (January 2015)

## REFERENCES CITED IN THE DESCRIPTION

**Non-patent literature cited in the description**

- **SHIBATA,T. ; KIM,J. ; HOFFMAN,D.M. ; BANKS,M.S.** The zone of comfort: Predicting visual discomfort with stereo displays. *Journal of Vision,* vol. 11 (8), 1-29

- **HEIKO HIRSCHMULLER.** Stereo processing by semiglobal matching and mutual information. *Pattern Analysis and Machine Intelligence, IEEE Transactions on,* 2008, vol. 30 (2), 328-341